# EUROPÄISCHE PATENTSCHRIFT

(11) **EP 3 630 444 B1**
(45) Veröffentlichungstag und Bekanntmachung des Hinweises auf die Patenterteilung: **01.09.2021**
(21) Anmeldenummer: 18729036.6
(22) Anmeldetag: 23.05.2018
(51) Int. Cl.: B29C 48/365, B29C 48/38, B29C 48/425, B29C 48/435, B29C 48/44, B29C 48/76

(54) **EXTRUDERSCHNECKE FÜR EINEN MEHRSCHNECKENEXTRUDER FÜR DIE KUNSTSTOFFEXTRUSION**
EXTRUDER SCREW FOR A MULTI-SCREW EXTRUDER FOR PLASTICS EXTRUSION
VIS D'EXTRUDEUSE POUR UNE EXTRUDEUSE MULTIVIS POUR L'EXTRUSION DE MATIÈRE SYNTHÉTIQUE

(30) Priorität: 23.05.2017 DE 102017111275
(43) Veröffentlichungstag der Anmeldung: 08.04.2020
(73) Patentinhaber: Gneuss GmbH, 32549 Bad Oeynhausen (DE)
(72) Erfinder: GNEUSS, Daniel, Charlotte NC 28277 (US); GNEUSS, Detlef, 6919 Carabietta (CH); GNEUSS, Stephan, 32547 Bad Oeynhausen (DE)
(74) Vertreter: Tarvenkorn, Oliver
(86) Internationale Anmeldenummer: PCT/DE2018/100497
(87) Internationale Veröffentlichungsnummer: WO 2018/215028

(56) Entgegenhaltungen:
- EP-A1- 1 434 680
- WO-A1-2013/180941

## Beschreibung

Die Erfindung betrifft eine Extruderschnecke für einen Mehrschneckenextruder für die Kunststoffextrusion mit den Merkmalen des Oberbegriffs des Anspruchs 1.

Ein solcher Mehrschneckenextruder dient der Gewinnung einer homogenen Kunststoffschmelze aus Kunststoff-Feststoffpartikeln, insbesondere von Polyestergranulat, und ist durch die Patentschrift EP 1434680 B1 der Anmelderin bekannt. EP 1 434 680 B1 offenbart den Oberbegriff des Anspruchs 1.

Bei diesem Extruder-Bautyp sind in der Entgasungszone mehrere Planetenschnecken vorgesehen. Die Kammervolumen der Planetenschnecken im Bereich der Entgasungszone werden im Betrieb des Mehrschneckenextruders nicht ausgefüllt, sodass eine entsprechend große Oberfläche des Kunststoffs gebildet wird, die die Entgasung erleichtert. Anschließend werden die Teilstränge der Kunststoffschmelze in einer Austrags- und/oder Kompressionszone wiedervereinigt und weitergeleitet, beispielsweise an eine nachgeschaltete Schmelzepumpe.

Die Schwierigkeit beim Gebrauch des bekannten Mehrschneckenextruders besteht darin, die zahlreichen Parameter zum Betrieb wie z. B. Antriebs- und Aufschmelzleistung, Massetemperatur und Verweilzeit in der Meteringzone zu optimieren. Eine zu hohe Massetemperatur kann zu nachteiligen Veränderungen des Kunststoffs führen, eine niedrige Massetemperatur führt hingegen zu unzureichender Aufschmelzung des Feststoffs in der Meteringzone. Eine lange Verweilzeit begünstigt zwar das Aufschmelzen und Homogenisieren, beschleunigt aber den hydrolytischen Abbau des Kunststoffs, der in dieser Phase noch Feuchtigkeit enthält.

Diese Optimierung ist insbesondere dann schwierig, wenn der Feststoff Recyclingware umfasst und daher ein inhomogenes Aufschmelzverhalten besitzt. In diesem Fall kann es dazu kommen, dass Feststoffanteile noch nicht ausreichend aufgeschmolzen worden sind, wenn sie die Multischneckensektion erreichen. Da die Planetenschnecken in der Multischneckensektion schwimmend in der Kunststoffschmelze gelagert sind, werden eventuell in der Schmelze mitgeführte Feststoffreste durch die Lagerstellen der Planetenschnecken gepresst und erhöhen den Verschleiß der Planetenschnecken und Lager.

Die Aufgabe der vorliegenden Erfindung besteht somit darin, eine Extruderschnecke der eingangs genannten Art so zu verbessern, dass bei nur kurzer Verweilzeit bis zum Erreichen der Entgasungszone eine homogen aufgeschmolzene Schmelze erzielt wird.

Diese Aufgabe wird erfindungsgemäß durch einen Mehrschneckenextruder mit den Merkmalen des Anspruchs 1 gelöst.

Erfindungsgemäß wird ein kontinuierlicher Übergang von einem Zulaufrohr, das z. B. von einer vorgeschalteten Extruder oder einer Pumpe gespeist wird, und/oder einer vorgeschalteten Monoschnecke zu der Multischneckensektion geschaffen, indem dort ein Konusabschnitt ausgebildet ist, um den Durchmesserübergang zwischen dem Zulauf und der Multischneckensektion zu gestalten. Der Konusabschnitt kann kegelabschnittsförmig oder auch - im Querschnitt gesehen - konkav oder konvex gekrümmt ausgebildet sein. Wesentlich ist nur, dass die über den Zulauf zugeführte Schmelze aufgefächert und den einzelnen in dem Konusabschnitt angeordneten Zulaufbohrungen für die Planetenschnecken zugeführt wird.

Der erfindungswesentliche Gedanke besteht darin, das Aufschmelzen und Homogenisieren, das sogenannte Metering, nicht vorgeschaltet durchzuführen, sondern diese bis in die Multischneckensektion hinein zu erstrecken.

Die Meteringzone umfasst also insgesamt einen Zulauf mit kleinerem Durchmesser, einen Konusabschnitt für die Strangaufweitung und Strangaufspaltung in mehrere Teilstränge und die Weiterführung der Teilstränge über mehrere Planetenschnecken bis zum Erreichen der Entgasungszone.

Während im Stand der Technik die konstruktiv getrennten Sektionen jeweils auch bestimmte Funktionen innehatten, ist nun vorgesehen, in einem Konstruktionsabschnitt, nämlich in der Multischneckensektion, mit denselben Planetenschnecken zwei Funktionen zugleich zu erfüllen, und andererseits eine Funktion, nämlich das Aufschmelzen und Homogenisieren, über wenigstens zwei konstruktive Abschnitte zu verteilen.

Der im Zulauf ausgebildete Teil der Meteringzone kann nach der Erfindung nur kurz ausgebildet sein oder sogar entfallen, so dass die Verweilzeit dort reduziert wird. Durch die direkt folgende Aufteilung in eine Vielzahl von Teillsträngen wird die Kontaktfläche der Schmelze zur Extruderschnecke vergrößert, sodass die in den Teilsträngen geführte Schmelze gut temperierbar ist. Insbesondere ist auch eine Kühlung der Schmelze möglich.

Da nicht nur die Enden der Planetenschnecken in Bohrungen eines Aufnahmeelements geführt sind, sondern sich der Anteil der Meteringzone an der Multischneckensektion über mindestens etwa ein Viertel der Länge der Planetenschnecken erstreckt, entstehen also entsprechend lange Fließkanäle mit jeweils kleinem Querschnitt, die eine gute Temperierung und Homogenisierung ermöglichen.

Dadurch, dass die Planetenschnecken aufgrund der gegebenen Durchmesserverhältnisse mit einem Mehrfachen der Drehzahl der Extruderschnecke selbst laufen, sind die Verweilzeiten in dem Längenanteil der Meteringzone innerhalb der Multischneckensektion kurz, können aber z. B. noch durch die Steigung der Planetenschnecken in dem umschlossenen Bereich variiert werden.

Hinsichtlich der Betriebsweise des erfindungsgemäßen Mehrschneckenextruders ist noch darauf hinzuweisen, dass die Kammern in den vollständig eingeschlossenen Längenbereichen der Planetenschnecken nach der Erfindung bevorzugt mit voller Füllung gefahren werden, sodass eine gute Förderwirkung erzielt wird. Aufgrund der sich anschließenden, drucklosen Entgasungszone besteht kein Gegendruck, und die in den vorgeschalteten Einrichtungen nur angeschmolzenen Schmelzebestandteile können gut eingezogen werden.

Die Antriebszone kann, wie an sich bekannt, am austragsseitigen Ende der Planetenschnecken vorgesehen sein. Die Planetenschnecken sind dazu an ihrem Ende bzw. in einem dem rückwärtigen Ende nahen Bereich mit einem Ritzel versehen oder mit einem solchen verbunden. Die Ritzel greifen in eine Innenverzahnung in der Wand der Extruderbohrung ein, sodass die Planetenschnecken synchron angetrieben sind.

Besonders bevorzugt ist jedoch, die Antriebszone dort anzuordnen, wo die funktionale Trennung bei den Planetenschnecken liegt, also dort, wo die vollständig eingeschlossenen Teile der Planetenschnecken mit der Meteringzone enden und in die offenen Bereiche der Entgasungszone übergehen. Die Anordnung an dieser Stelle hat den Vorteil, dass das Antriebsdrehmoment, das an den Planetenschnecken überwiegend für die Aufschmelzen und Homogenisierung in dem der Meteringzone zuzuordnenden Längenabschnitt der Multischneckensektion benötigt wird, direkt eingeleitet werden kann. Eine Torsion der dünnen Planetenschneckenwellen über ihre gesamte Länge zwischen Einzug und Austrag wird durch eine solche Anordnung der Antriebszone in der Mitte der Länge oder noch weiter vorn vermieden. Die jeweiligen in Fließrichtung stromabwärts gelegenen Längenabschnitte der Planetenschneckenwellen in der Multischneckensektion sind, obwohl sie länger sind, kaum belastet, da im Bereich der Entgasungszone die Schnecken nur teilgefüllt sind und somit nur geringe Drehmomente notwendig sind.

Hinzuweisen ist darauf, dass die Anordnung der Antriebszone nicht zwingend exakt am Übergang zwischen zwei funktionellen Zonen zu liegen hat, sondern auch mit wenigstens einer der benachbarten Zonen überlappen kann, da die Schmelze ohnehin über die Verzahnung in der Antriebszone geleitet wird.

Da bei dem erfindungsgemäßen Mehrschneckenextruder deutlich mehr Drehmoment für die Planetenschnecken aufgebracht werden muss, als im Stand der Technik, wo die Planetenschnecken nur vollständig aufgeschmolzene Schmelze in teilgefüllten Kammern zum Zwecke der Entlüftung fördern, sind die zu übertragenden Drehmomente deutlich höher, so dass es zudem vorteilhaft ist, die Antriebsritzel wie auch die zugehörige Verzahnung an einem Statorring oder direkt in der Extruderbohrung mit einer Schrägverzahnung zu versehen.

Die Erfindung sieht vor, die Multischneckensektion als Teil einer einheitlich angetriebenen Extruderschnecke vorzusehen, wobei im Zulauf und ggf. auch im Auslauf jeweils eine Monoschneckensektion vorgesehen ist. Die Meteringzone wird aufgeteilt in einen Anteil, der durch eine vorgeschaltete Monoschnecke abgebildet ist und den Anteil in der Multischneckensektion. Dabei ergibt sich als Vorteil, dass die Monoschneckensektion kürzer sein kann als im Stand der Technik, so dass die Verweilzeit reduziert ist. Ein Vorteil der erfindungsgemäßen Extruderschnecke hierbei ist, dass in der Monoschneckensektion gleich zu Beginn der Verarbeitung eine höhere Antriebsleistung vorgesehen sein kann, die zu einem schnelleren Aufschmelzen führt. Lokale Überhitzungen werden jedoch vermieden, weil durch die sich sofort anschließende Auffächerung in Teilstränge über den Konusabschnitt in die Multischneckensektion eine größere Kühlleistung erreichbar ist und damit eine thermische Schädigung vermieden wird.

Die Erfindung wird nachfolgend mit Bezug auf die Zeichnungen näher erläutert. Die Figuren zeigen im Einzelnen:
- Figur 1: Teile einer Extruderschnecke für einen erfindungsgemäßen Mehrschneckenextruder gemäß einer ersten Ausführungsform, in perspektivischer Ansicht;
- Figur 2: Teile einer Extruderschnecke gemäß einer zweiten Ausführungsform, in perspektivischer Ansicht;
- Figur 3: Teile der Extruderschnecke nach Figur 2, in perspektivischer Ansicht;
- Figur 4: ein Detail der Extruderschnecke nach Figur 2, in perspektivischer Ansicht und
- Figur 5: eine Planetenschnecke der zweiten Ausführungsform der Extruderschnecke, in seitlicher Ansicht.

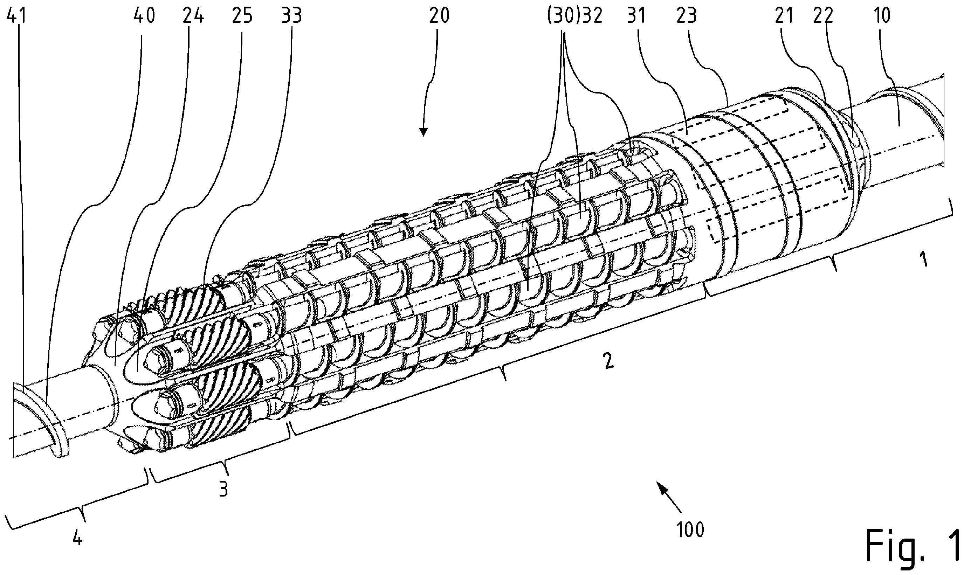

Figur 1 zeigt einen Ausschnitt einer Extruderschnecke 100 in perspektivischer Ansicht, soweit er für die Erfindung wesentlich ist. Kunststoffpartikel- bzw. Kunststoffschmelze werden in der in Fig. 1 dargestellten Lage von rechts eingezogen und nach links ausgetragen.

Über die Länge sind vier Funktionszonen vorgesehen:
- Ein erster Längenabschnitt nach dem hier nicht sichtbaren Einzug bildet die sogenannte Meteringzone 1, in welcher das Kunststoffgranulat aufgeschmolzen und homogenisiert wird.
- Es schließt sich eine Entgasungszone 2 an. An dem hier ebenfalls nicht dargestellten Gehäuse des Extruders ist hier eine Absaugeinrichtung vorgesehen, sodass flüchtige Bestandteile aus der Entgasungszone 2 abgesaugt werden können.
- Die in der Meteringzone 1 aufgeschmolzene und in der sich anschließenden Entgasungszone 2 entgaste Schmelze muss durch eine Antriebszone 3 hindurch laufen, und wird dahinter in einer Austragszone 4 komprimiert und abgefördert.

Konstruktiv gesehen teilt sich die Extruderschnecke 100 im Wesentlichen in drei Abschnitte:
- eine erste Monoschneckensektion 10;
- eine Multischneckensektion 20 mit einer Vielzahl von Planetenschnecken 30 und
- eine zweite Monoschneckensektion 40.

Bevorzugt sind die Monoschneckensektionen 10, 40 und die Multischneckensektion 20 jeweils als separate Elemente ausgebildet, die miteinander zu einer einheitlichen Extruderschneckenwelle 100 verbunden sind. Dadurch ist die Fertigung vereinfacht, und bei Verschleiß ist ein leichterer und kostengünstigerer Austausch einzelner Sektionen möglich.

Am Übergang von der ersten Monoschneckensektion 10 in die Multischneckensektion 20 ist ein Planetenschneckengehäuse 23 mit einem Konusabschnitt 21 ausgebildet, der je Planetenschnecke 30 wenigstens eine Planetenschneckenbohrung 22 aufweist.

Konusabschnitt 21 und Planetenschneckengehäuse 23 bilden einen ersten Längenabschnitt der Multischneckensektion 20, der der Meteringzone 1 zugeordnet ist. Die Planetenschneckenbohrungen 22 setzen sich in tiefen Fließkanälen innerhalb des Planetenschneckengehäuses 23 fort. Die Planetenschnecken 30 sind hierin über eine Teillänge 31 vollständig umschlossen, wohingegen ein größerer Längenanteil 32 der Planetenschnecken 30 in der sich anschließenden Entgasungszone 2 offen liegt. Das Verhältnis zwischen dem umschlossenen Längenabschnitt 31 und dem offen liegenden Längenabschnitt 32 der Planetenschnecken 30 beträgt bei dem dargestellten Ausführungsbeispiel etwa 1:2 bis 1:4. Dieses Längenverhältnis wird spezifisch nach dem zu verarbeitenden Ausgangsstoff gewählt, um einerseits in der Meteringzone 1 eine möglichst homogene Aufschmelzung zu erreichen und andererseits eine wirksame Entgasung durchführen zu können.

Am Außenumfang des Konusabschnitts 21 und/oder des Planetenschneckengehäuses 23 ist wenigstens eine Schneckenwendel ausgebildet, so dass die von der Monoschneckensektion 10 zugeführte Schmelze nicht nur auf die einzelnen Planetenschnecken 30 verteilt wird, sondern zu einem Teil auch über den Außenumfang des Konusabschnitts 21 gefördert wird. Durch die flüssige Schmelze wird eine Schmierung der Extruderschnecke 100 gegenüber der Bohrung im Extrudergehäuse erreicht.

Am rückwärtigen, austragsseitigen Ende sind die Planetenschnecken 30 jeweils mit einem Ritzel 33 versehen. Die Enden der Planetenschnecken 30 sind in Lageraufnahmen 25 in einem Stützlager 24 schwimmend gelagert. Dieses geht über einen weiteren Konusabschnitt in eine zweite Monoschneckensektion 40 mit einer Austragsschnecke 41 über, die eine Austragszone 4 bildet.

Die Verzahnung des Ritzels 31 kann als Gerad- oder Schrägverzahnung ausgeführt werden: Bei einer Schrägverzahnung ist es vorteilhaft, die Steigung im gleichen Drehsinn wie die Steigung des Schneckenstegs der Planetenschnecken 30 zu wählen. Damit wird eine zusätzliche Förderwirkung erreicht. Diese unterstützt bei einer Anordnung des Ritzels 31 am Ende den Austrag aus der Multischneckensektion 20 unterstützt.

Während in dem Planetenschneckengehäuses 23 die Planetenschnecken 30 voll gefüllt ist, wird in der offen liegenden Entgasungszone 2 freies Volumen benötigt. Da in diesem Teil die Planetenwellenschnecken 30 nicht voll ummantelt sind und daher die Förderwirkung abnimmt, muss eine deutliche Erhöhung der Gangtiefe um mindestens Faktor 2 erfolgen, um ein akzeptables Entgasungsergebnis zu erhalten. In der Praxis haben sich deutlich höhere Werte bewährt. Ein Verhältnis von 4 bringt bereits eine deutliche Verbesserung der Entgasungsleistung. Die besten Ergebnisse können mit Gangtiefenverhältnissen der Gangtiefe in der Entgasungszone 2 zu der Gangtiefe in der Meteringzone 1 von größer 5:1 erzielt werden.

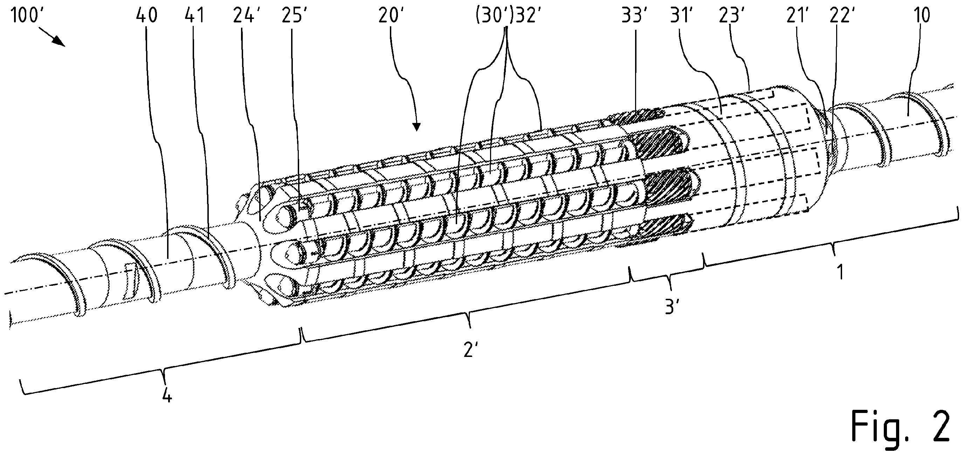

Figur 2 zeigt einen Ausschnitt einer zweiten Ausführungsform einer erfindungsgemäßen Extruderschnecke 100' in perspektivischer Ansicht. Wie bei der ersten Ausführungsform auch sind drei wesentliche konstruktive Abschnitte vorgesehen:
- die erste Monoschneckensektion 10;
- eine Multischneckensektion 20' mit einer Vielzahl von Planetenschnecken 30', die einzugsseitig in einem Planetenschneckengehäuse 23' mit einem Konusabschnitt 21' und Zulaufbohrungen 22' sowie austragsseitig in einem Stützlager 24' gelagert sind und
- die zweite Monoschneckensektion 40 mit der Austragsschnecke 41.

Die funktionelle Aufteilung der Extruderschnecke 100' umfasst ebenfalls die vier Zonen:
- eine Meteringzone 1',
- eine Entgasungszone 2',
- eine Antriebszone 3' und
- eine Austragszone 4'.

Allerdings ist die sequentielle Anordnung bei der zweiten Ausführungsform unterschiedlich; die Antriebszone 3' liegt nämlich zwischen der Meteringzone 1' und der Entgasungszone 2'. Dazu sind unmittelbar dort, wo die Planetenschnecken 30' mit ihrem der Meteringzone 1' zuzuordnenden Längenabschnitt 31' aus dem Planetenschneckengehäuse 23' heraustreten, jeweils Ritzel 33' ausgebildet oder aufgesetzt. Der in Fließrichtung hinter den Ritzeln 33' liegende Längenabschnitt 32' der Planetenschnecken 30' ist der Entgasungszone 2' zuzuordnen. Die austragsseitigen Spitzen der Planetenschnecken 30' sind in ringförmigen Lageraufnahmen 25' des Stützlagers 24' gelagert.

Bei der Anordnung des Ritzels 33' in der Mitte bzw. im vorderen Drittel der Länge der Planetenschneckenwellen 30 kann eine Schrägverzahnung die Förderung in die Entgasungszone 2 hinein unterstützen. Bei einer Wahl des gesamten Gangvolumens der Verzahnung, das sich als Produkt aus freier Fläche und der Gangsteigung errechnet, in einer Weise, dass es ähnlich dem Gangvolumen im Planetenschneckenteil ist, kann sogar zugleich die Plastifizierung unterstützt werden.

Besonders vorteilhaft ist es, wenn der Schrägungswinkel der Verzahnung zumindest so gewählt wird, dass die resultierende Gangsteigung mindestens so groß wie die Gangsteigung der Planetenschnecken ist, insbesondere wenigstens der 1,5 fachen Gangsteigung entspricht.

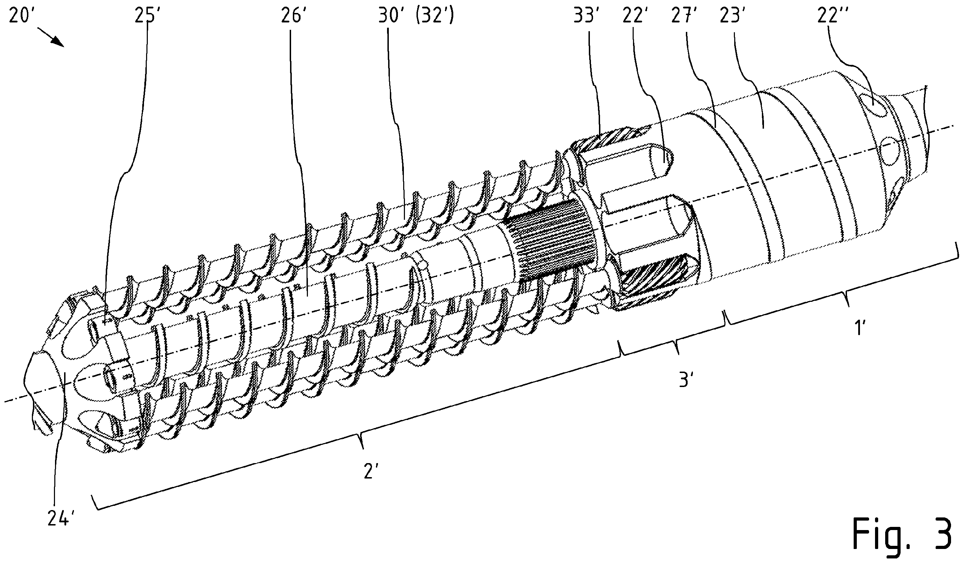

Figur 3 zeigt die Multischneckensektion 20' der Extruderschnecke 100' in einer vergrößerten perspektivischen Ansicht, wobei zwei der insgesamt acht Planetenschneckenwellen 30 entfernt wurden, um den Blick auf eine innen liegende Zentralwelle 26' frei zu geben, um welche herum die rotierenden Planetenschnecken 30' angeordnet sind. Die Zentralwelle 26' ist in ihrem austragsseitigen Endabschnitt mit einer Kühlspirale als Teil der Innenkühlung versehen ist.

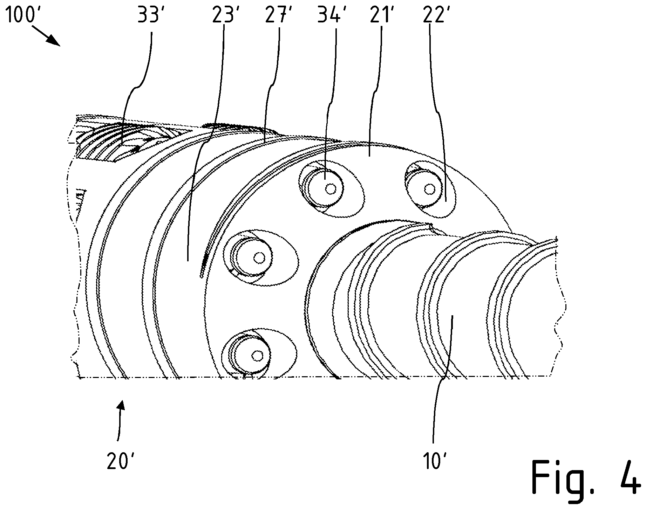

Figur 4 zeigt eine perspektivische Ansicht mit Blick auf die Stirnseite des Konusabschnitts 21' der Multischneckensektion 20' von der Monoschneckensektion 10' her gesehen. In den Planetenschneckenbohrungen 22' des Planetenschneckengehäuses 23' sind Spitzen 34' der Planetenschneckenwellen 30' erkennbar. In dem Planetenschneckengehäuse 23' sind die Planetenschneckenwellen 30' zunächst vollständig eingehaust und liegen erst in der Antriebszone wieder frei, wo die Ritzel 33' angeordnet sind. Der Außenumfang des Planetenschneckengehäuses 23' weist am Außenumfang einen Schneckensteg 27' mit geringer Steghöhe auf.

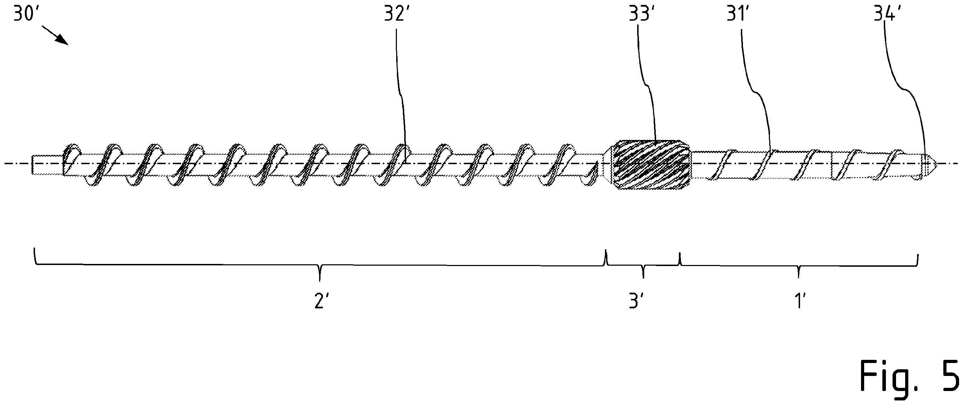

In Figur 5 ist eine einzelne Planetenschnecke 30' in seitlicher Ansicht dargestellt. Von einer Spitze 34' aus ist zunächst der Längenabschnitt 31' der Planetenschnecke 30' ausgebildet, der eine geringe Steghöhe aufweist. Dieser Teil, der der Meteringzone 1' zuzuordnen ist, ist innerhalb der Planetenschneckenbohrungen 22' (siehe Figur 4) geführt. Dahinter schließt sich ein Abschnitt an, der zur Antriebssektion 3' gehört und zur Aufnahme eines Ritzels 33' ausgebildet ist oder eine direkt eingearbeitete Verzahnung aufweist. In einem austragsseitigen Endabschnitt, der etwa zwei Drittel der Gesamtlänge ausmacht und der Entgasungszone 2' zugeordnet ist, ist der Kerndurchmesser der Schnecke reduziert und die Steghöhe entsprechend vergrößert. Das Kammervolumen ist gegenüber dem Längenabschnitt 31' vergrößert, so dass weitgehend unabhängig von der jeweiligen Steigung in den Abschnitten 31', 32' erreicht wird, dass im Längenabschnitt 32' die Kammern nur teilgefüllt sind, damit eine gute Entgasungswirkung erzielt wird.

## Patentansprüche

1. Extruderschnecke (100; 100') für einen Mehrschneckenextruder für die Kunststoffextrusion, wenigstens umfassend:
- eine Einzugs- und Meteringzone (1; 1') zum Aufschmelzen und Homogenisieren des Kunststoffs und eine Evakuierungszone (2; 2') zur Ableitung gasförmiger Bestandteile und eine Kompressions- und/oder Austragszone (4; 4'), die wenigstens eine Monoschneckensektion (10) umfasst;
- eine Multischneckensektion (20; 20'), die eine Mehrzahl von Planetenschnecken (30; 30') aufweist, welche zumindest über einen Teil Ihrer Länge am Außenumfang der Extruderschnecke (100; 100') offen liegen;
- eine Antriebszone (3; 3'), in welcher die Planetenschnecken (30; 30') über eine Verzahnung (33; 33') in eine Außenverzahnung an einer Zentralwelle (26') oder in eine Innenverzahnung in einem Statorring oder in der Innenwandung einer Extruderbohrung des Mehrschneckenextruders eingreift;
**dadurch gekennzeichnet,**
- **dass** sich die Einzugs- und Meteringzone (1; 1') bis in die Multischneckensektion (20; 20') erstreckt, indem die Monoschneckensektion (10) über einen Konusabschnitt (21) in die Multischneckensektion (20) übergeht, wobei der Konusabschnitt (21) und ein sich daran anschließendes Planetenschneckengehäuse (23) einen ersten Längenabschnitt der Multischneckensektion (20) bilden,
- **dass** am Anfang der Multischneckensektion (20; 20') der Konusabschnitt (21; 21') ausgebildet ist, der je Planetenschnecke (30; 30') wenigstens eine Planetenschneckenbohrung (22; 22') aufweist;
- **dass** sich die Planetenschneckenbohrungen (22) in innerhalb des Planetenschneckengehäuses (23) liegenden Fließkanälen fortsetzen und dass die Planetenschnecken (30) hierin über eine Teillänge (31) vollständig von dem Planetenschneckengehäuse (23) umhüllt sind,
- **dass** ein gegenüber der ersten Teillänge (31) größerer Längenanteil (32) der Planetenschnecken (30) in der sich anschließenden Entgasungszone (2) offen liegt, indem er von dem Planetenschneckengehäuse (23) nicht umhüllt ist.

2. Extruderschnecke (100) nach Anspruch 1, **dadurch gekennzeichnet, dass** in Strömungsrichtung gesehen hinter der Multischneckensektion (20; 20') eine Kompressions- und/oder Austragszone (4; 4') vorgesehen ist, die als eine Monoschneckensektion (40) gebildet ist.

3. Extruderschnecke (100; 100') nach Anspruch 1 oder 2, **dadurch gekennzeichnet, dass** die Zentralwelle (26') der Multischneckensektion (20; 20') und ggf. die Monoschneckensektionen (10, 40) jeweils als Teil einer einheitlichen Extruderschnecke ausgebildet sind.

4. Extruderschnecke (100') nach einem der vorhergehenden Ansprüche, **dadurch gekennzeichnet, dass** die Antriebszone (3; 3') am rückwärtigen Ende der Multischneckensektion (20; 20' angeordnet ist.

5. Extruderschnecke (100') nach einem der Ansprüche 1 bis 3, **dadurch gekennzeichnet, dass** die Antriebszone (3') innerhalb der Multischneckensektion (20'), zwischen der Meteringzone (1') und der Evakuierungszone (2') angeordnet ist.

6. Extruderschnecke (100; 100') nach einem der vorhergehenden Ansprüche, **dadurch gekennzeichnet, dass** die Rotorwelle der Multischneckensektion (20; 20') und die Monoschneckensektionen (40) jeweils als separate Extruderschneckenteilelemente ausgebildet sind, die lösbar miteinander verbunden sind.

7. Extruderschnecke (100; 100') nach einem der vorhergehenden Ansprüche, **dadurch gekennzeichnet, dass** der Außenumfang des Planetenschneckengehäuses (23; 23') mit wenigstens einem Schneckensteg (27') versehen ist und überströmbar ist.

8. Mehrschneckenextruder für die Kunststoffextrusion, wenigstens umfassend ein Extrudergehäuse mit einer Extruderbohrung, in dem eine Extruderschnecke (100; 100') nach einem der vorhergehenden Ansprüche aufgenommen ist.

9. Mehrschneckenextruder nach Anspruch 8, **dadurch gekennzeichnet, dass** die Einzugs- und Meteringzone (1; 1') eine vor der Multischneckensektion (20; 20') angeordnete Rohrleitung umfasst, die mit einer Pumpe verbindbar ist.

10. Mehrschneckenextruder nach Anspruch 8 oder 9, **dadurch gekennzeichnet, dass** die Kompressions- und/oder Austragszone (4; 4') eine hinter der Multischneckensektion (20; 20') angeordnete Rohrleitung umfasst, die mit einer Pumpe verbindbar ist.

## Claims

1. Extruder screw (100; 100') for a multi-screw extruder for plastics extrusion, at least comprising:
- a feed and metering zone (1; 1') for melting and homogenizing the plastic and an evacuation zone (2; 2') for discharging gaseous constituents and a compression and/or discharge zone (4; 4'), which comprises at least one single-screw section (10);
- a multi-screw section (20; 20'), which has a plurality of planetary screws (30; 30') which are exposed on the outer circumference of the extruder screw (100; 100') at least over a part of their length;
- a drive zone (3; 3'), in which the planetary screws (30; 30') engage, by means of a toothing (33; 33'), in an external toothing on a central shaft (26') or in an internal toothing in a stator ring or in the inner wall of an extruder bore of the multi-screw extruder; **characterized**
- **in that** the feed and metering zone (1; 1') extends into the multi-screw section (20; 20') in that the single-screw section (10) transitions into the multi-screw section (20) by means of a cone portion (21), wherein the cone portion (21) and a planetary screw housing (23) adjoining it form a first longitudinal portion of the multi-screw section (20),
- **in that** the cone portion (21; 21') is formed at the start of the multi-screw section (20; 20'), said cone portion having at least one planetary screw bore (22; 22') per planetary screw (30; 30');
- **in that** the planetary screw bores (22) continue in flow channels which lie within the planetary screw housing (23), and in that the planetary screws (30) therein are completely enveloped by the planetary screw housing (23) over a partial length (31),
- **in that** a length proportion (32) of the planetary screws (30) which is larger than the first partial length (31) is exposed in the adjoining degassing zone (2) in that said length proportion is not enveloped by the planetary screw housing (23).

2. Extruder screw (100) according to Claim 1, **characterized in that** a compression and/or discharge zone (4; 4'), which is formed as a single-screw section (40), is provided downstream of the multi-screw section (20; 20') as seen in the flow direction.

3. Extruder screw (100; 100') according to Claim 1 or 2, **characterized in that** the central shaft (26') of the multi-screw section (20; 20') and optionally the single-screw sections (10, 40) are each configured as part of a unitary extruder screw.

4. Extruder screw (100') according to one of the preceding claims, **characterized in that** the drive zone (3; 3') is arranged at the rear end of the multi-screw section (20; 20').

5. Extruder screw (100') according to one of Claims 1 to 3, **characterized in that** the drive zone (3') is arranged within the multi-screw section (20'), between the metering zone (1') and the evacuation zone (2').

6. Extruder screw (100; 100') according to one of the preceding claims, **characterized in that** the rotor shaft of the multi-screw section (20; 20') and the single-screw sections (40) are each configured as separate extruder screw sub-elements, which are connected to one another in a releasable manner.

7. Extruder screw (100; 100') according to one of the preceding claims, **characterized in that** the outer circumference of the planetary screw housing (23; 23') is provided with at least one screw web (27') and can be flowed over.

8. Multi-screw extruder for plastics extrusion, at least comprising an extruder housing with an extruder bore, an extruder screw (100; 100') according to one of the preceding claims being received in said extruder housing.

9. Multi-screw extruder according to Claim 8, **characterized in that** the feed and metering zone (1; 1') comprises a pipeline which is arranged upstream of the multi-screw section (20; 20') and which can be connected to a pump.

10. Multi-screw extruder according to Claim 8 or 9, **characterized in that** the compression and/or discharge zone (4; 4') comprises a pipeline which is arranged downstream of the multi-screw section (20; 20') and which can be connected to a pump.

## Revendications

1. Vis sans fin d'extrudeuse (100 ; 100') pour une extrudeuse à vis sans fin multiples pour l'extrusion de matière plastique, comprenant au moins :
- une zone d'introduction et de dosage (1 ; 1'), destinée à mettre en fusion et à homogénéiser la matière plastique, et une zone d'évacuation (2 ; 2'), destinée à évacuer des composants gazeux, et une zone de compression et/ou de décharge (4 ; 4'), qui comporte au moins une section à vis sans fin unique (10) ;
- une section à vis sans fin multiples (20 ; 20'), laquelle possède une pluralité de vis sans fin planétaires (30 ; 30') qui sont ouvertes au moins sur une partie de leur longueur au niveau du pourtour extérieur de la vis sans fin d'extrudeuse (100 ; 100') ;
- une zone d'entraînement (3 ; 3), dans laquelle les vis sans fin planétaires (30 ; 30') viennent en prise, par le biais d'une denture (33 ; 33'), dans une denture externe au niveau d'un arbre central (26') ou dans une denture interne dans un anneau de stator ou dans la paroi intérieure d'un alésage d'extrudeuse de l'extrudeuse à vis sans fin multiples ;
**caractérisée en ce**
- **que** la zone d'introduction et de dosage (1 ; 1') s'étend jusque dans la section à vis sans fin multiples (20 ; 20') en ce que la section à vis sans fin unique (10) se transforme en la section à vis sans fin multiples (20) par le biais d'une portion conique (21), la portion conique (21) et un carter de vis sans fin planétaire (23) qui s'y rattache formant une première portion longitudinale de la section à vis sans fin multiples (20),
- **qu'**au début de la section à vis sans fin multiples (20 ; 20') est formée la portion conique (21 ; 21'), qui présente au moins un alésage de vis sans fin planétaire (22 ; 22') pour chaque vis sans fin planétaire (30 ; 30'),
- **que** les alésages de vis sans fin planétaire (22) se poursuivent dans des canaux d'écoulement qui se trouvent à l'intérieur du carter de vis sans fin planétaire (23) et que les vis sans fin planétaires (30), là-dedans, sont entièrement enveloppées par le carter de vis sans fin planétaire (23) sur une longueur partielle (31),
- **qu'**une part de longueur (32) plus grande que la première longueur partielle (31) des vis sans fin planétaires (30) est ouverte dans la zone de dégazage (2) qui s'y rattache en ce qu'elle n'est pas enveloppée par le carter de vis sans fin planétaire (23).

2. Vis sans fin d'extrudeuse (100) selon la revendication 1, **caractérisée en ce qu'**une zone de compression et/ou de décharge (4 ; 4'), vue dans le sens de l'écoulement, se trouve derrière la section à vis sans fin multiples (20 ; 20'), laquelle est réalisée sous la forme d'une section à vis sans fin unique (40).

3. Vis sans fin d'extrudeuse (100 ; 100') selon la revendication 1 ou 2, **caractérisée en ce que** l'arbre central (26') de la section à vis sans fin multiples (20 ; 20') et éventuellement des sections à vis sans fin unique (10, 40) est respectivement réalisé comme partie d'une vis sans fin d'extrudeuse uniforme.

4. Vis sans fin d'extrudeuse (100') selon l'une des revendications précédentes, **caractérisée en ce que** la zone d'entraînement (3 ; 3') est disposée au niveau de l'extrémité arrière de la section à vis sans fin multiples (20 ; 20').

5. Vis sans fin d'extrudeuse (100') selon l'une des revendications 1 à 3, **caractérisée en ce que** la zone d'entraînement (3') est disposée à l'intérieur de la section à vis sans fin multiples (20'), entre la zone de dosage (1') et la zone d'évacuation (2').

6. Vis sans fin d'extrudeuse (100 ; 100') selon l'une des revendications précédentes, **caractérisée en ce que** l'arbre de rotor de la section à vis sans fin multiples (20 ; 20') et les sections à vis sans fin unique (40) sont respectivement réalisés sous la forme d'éléments partiels de vis sans fin d'extrudeuse, qui sont reliés ensemble de manière amovible.

7. Vis sans fin d'extrudeuse (100 ; 100') selon l'une des revendications précédentes, **caractérisée en ce que** le pourtour extérieur du carter de vis sans fin planétaire (23 ; 23') est pourvu d'au moins une nervure de vis sans fin (27') et peut être submergé.

8. Extrudeuse à vis sans fin multiples pour l'extrusion de matière plastique, comprenant au moins un boîtier d'extrudeuse pourvu d'un alésage d'extrudeuse dans lequel est accueillie une vis sans fin d'extrudeuse (100 ; 100') selon l'une des revendications précédentes.

9. Extrudeuse à vis sans fin multiples selon la revendication 8, **caractérisée en ce que** la zone d'introduction et de dosage (1 ; 1') comporte une conduite tubulaire disposée devant la section à vis sans fin multiples (20 ; 20'), laquelle peut être reliée à une pompe.

10. Extrudeuse à vis sans fin multiples selon la revendication 8 ou 9, **caractérisée en ce que** la zone de compression et/ou de décharge (4 ; 4') comporte une conduite tubulaire disposée derrière la section à vis sans fin multiples (20 ; 20'), laquelle peut être reliée à une pompe.
